# EUROPÄISCHE PATENTSCHRIFT

(11) **EP 2 385 448 B1**
(45) Veröffentlichungstag und Bekanntmachung des Hinweises auf die Patenterteilung: **13.03.2013**
(21) Anmeldenummer: 10161949.2
(22) Anmeldetag: 05.05.2010
(51) Int. Cl.: G06F 3/044, G06F 3/045, G06F 3/041

(54) **Berührungssensitive Sensoranordnung**
Touch-sensitive sensor assembly
Agencement de capteur sensible au contact

(43) Veröffentlichungstag der Anmeldung: 09.11.2011
(73) Patentinhaber: Siemens Aktiengesellschaft, 80333 München (DE)
(72) Erfinder: Streichert, Gerhard, 92353, Postbauer-Heng (DE); Wolf, Horst, 91056, Erlangen (DE)

(56) Entgegenhaltungen:
- WO-A2-02/052495

## Beschreibung

Die Erfindung betrifft eine berührungssensitive Sensoranordnung, umfassend ein flächig ausgeprägtes Element, wobei eine Oberfläche des Elementes mit einer leitfähigen Schicht versehen ist, mehrere Anschlussstellen, wobei die Anschlussstellen jeweils in einem Randbereich des Elementes angeordnet sind und die leitfähige Schicht kontaktieren.

Berührungssensitive Sensoranordnungen sind dem Fachmann auch als Touchsensoren bekannt. Diese Touchsensoren bilden im gemeinsamen Aufbau mit einem Bildschirm einen berührungssensitiven Bildschirm, welcher auch als Touchscreen bezeichnet wird. Durch den Touchsensor können beim Berühren einer durch den Touchsensor gebildeten Bildschirmoberfläche Aktionen ausgelöst werden, welche sich dazu eignen, ein elektrisches Gerät zu steuern. Derartige Touchscreens finden heutzutage Anwendung in Eingabegeräten, beispielsweise zur Fahrzeugdiagnose, in der Industrie- und Anlagensteuerung, in Industrie-PC, in der Medizintechnik, in Kassenautomaten, oder bei Handheld-Computern, welche beispielsweise mit einer Stifteingabe bedient werden können.

Werden oben genannte Geräte in rauer Umgebung, insbesondere bei starker Kälte eingesetzt, kann die Bildschirmoberfläche bzw. die Berührfläche betauen oder einfrieren, welches eine einwandfreie Funktion der Sensoranordnung beeinträchtigt.

Aus der WO 02/052495 A2 ist bereits eine Anzeige mit einer elektrisch leitenden Schicht bekannt. Auch ist es nach dem Stand der Technik bekannt, bei derartigen Anzeigevorrichtungen eine Heizung für die Bildschirmoberfläche einzusetzen. Allerdings ist es bei der nach dem Stand der Technik bekannten Vorrichtung von Nachteil, dass eine Heizvorrichtung auf einer zusätzlichen Glasscheibe angeordnet ist. Diese zusätzliche Glasscheibe wird dabei hinter einer Glasscheibe des eigentlichen Touchsensors angeordnet. Dies hat den Nachteil, dass die zusätzliche Glasscheibe eine zusätzliche Lichtbrechung in dem Strahlengang des Displays hervorruft, was eine geringere Helligkeit, einen geringeren Kontrast zur Folge hat und durch einen größeren Abstand der Sensoranordnung zum Display einen Paralaxefehler mitbringt.

Es ist daher die Aufgabe der Erfindung eine Sensoranordnung bereitzustellen, welche für einen Touchscreen eingesetzt werden kann, welcher beheizbar ist, aber ohne eine zusätzliche Glasscheibe auskommt.

Für die eingangs genannte berührungssensitive Sensoranordnung wird die Aufgabe dadurch gelöst, dass zwischen den Anschlussstellen und zugehörigen Anschlussleitungen zur Positionsauswertung einer Berührung des Elementes mit einem Berührmittel, jeweils ein Entkopplungsmittel zur Entkopplung eines an zumindest zwei Anschlussstellen angelegten Stromes von einem Auswertesignal, wobei durch den Strom das Element beheizbar ist. Bei dem die Sensoranordnung umfassenden flächig ausgeprägten Element handelt es sich beispielsweise um eine Glasscheibe, welche durch eine Aufdampfung mit Metall mit einer leitfähigen Schicht versehen ist. Diese leitfähige Schicht wird bei der Sensoranordnung zur Ermittlung einer berührten Bildschirmposition bei einem nach einem kapazitiven Verfahren oder nach einem resistiv arbeitenden Verfahren einer Sensoranordnung genutzt.

Beim kapazitiven Verfahren ist eine Oberfläche des Elementes, vorzugsweise einer Glasscheibe, in eine kapazitive Matrix eingeteilt. Durch Berührung mit einem Berührmittel, beispielsweise einem Finger einer menschlichen Hand, wird diese Matrix kapazitiv beeinflusst, was Rückschlüsse auf die XY-Koordinaten zulässt. Bei diesem Verfahren wird, vorzugsweise über eine metallische Beschichtung aus Indium-Zinnoxid (ITO), auf der Glasoberfläche ein geringes Feld erzeugt, welches über die Anschlussstellen mit den zugehörigen Anschlussleitungen ausgewertet werden kann. Da eine Auswertung des Auswertesignals zur Positionsbestimmung nicht zeitgleich mit einem durch die metallische Schicht fließendem Heizstrom geschehen kann, wird der angelegte Heizstrom an den Anschlussstellen über Entkopplungsmittel von dem Auswertesignal getrennt. Da bei einer kapazitiv arbeitenden Sensoranordnung die Positionsbestimmung auf dem flächig ausgeprägten Element mittels Wechselstromsignalen, vorzugsweise hochfrequenter Wechselstrom, durchgeführt wird, kann ein geeignetes Kopplungsmittel gewählt werden, welches einen als Gleichstrom angelegten Heizstrom nicht durchlässt, aber dennoch das beispielsweise hochfrequente Auswertesignal durchlässt.

In einer vorteilhaften Ausgestaltung sind die Entkopplungsmittel demnach als eine galvanische Trennung ausgestaltet. Vorzugsweise werden die Entkopplungsmittel dabei als eine kapazitive Trennung ausgestaltet. Das bedeutet zwischen einer Anschlussstelle und einer Anschlussleitung zur Signalauswertung könnte zur kapazitiven Trennung ein Kondensator angeordnet sein oder zur induktiven Trennung eine Spule angeordnet sein.

In einer alternativen Ausgestaltung zur galvanischen Trennung sind die Entkopplungsmittel jeweils als ein Schaltelement ausgestaltet, welche die Anschlussstellen von den Anschlussleitungen für das Auswertesignal trennen. Diese Schaltelemente können sowohl elektromechanisch als auch als Schalthalbleiter ausgeführt sein. Ein Schaltelement könnte beispielsweise mit einer ersten Anschlussseite an der Anschlussstelle angeordnet sein und mit einer zweiten Anschlussseite an einer Anschlussleitung und mit einer dritten Anschlussseite an einer Heizleitung angeschlossen sein. Demnach würde das Schaltelement wie ein Wechselschalter funktionieren und in einem gewünschten Wechseltakt zwischen der Auswerteleitung und der Heizleitung hin- und herschalten. Es entstehen demnach Zeitabschnitte in denen die Sensoranordnung von einem Heizstrom freigeschaltet ist und eine Positionserkennung durchführen kann und es entstehen Zeitabschnitte in denen die Sensoranordnung von den Anschlussleitungen zur Auswertung des Auswertesignals freigeschaltet ist und die Sensoranordnung bzw. die metallische Oberfläche mit einem Heizstrom beschickt werden kann.

Vorteilhafter Weise sind die Schaltelemente derart ausgestaltet, dass sie mittels einer Steuerschaltung steuerbar sind. Hierbei wird vorzugsweise eine Multiplexerschaltung eingesetzt, welche die Entkopplung durch ein zeitliches Multiplexverfahren steuert. Während an die metallische Fläche eine Gleichspannung angeschlossen wird, um die Heizwirkung zu erzielen, wird die kapazitive Touchauswertung abgeschaltet und abgetrennt. Umgekehrt wird die Heizspannung abgeschaltet, wenn die kapazitive Auswertung aktiv ist. Geschieht ein derartiger Wechsel, vorzugsweise mehrmals pro Sekunde, insbesondere mit einer Frequenz von mindestens 10 Hz, so bemerkt ein Benutzer beim Auslösen einer Funktion auf der Sensoroberfläche kaum noch eine Verzögerung, da die Reaktionszeit eines Menschen in der Regel im Bereich einer Sekunden liegt.

Eine weit verbreitete Technik, einen Touchsensor aufzubauen, ist im Gegensatz zu dem kapazitiven Verfahren das resistive Verfahren, welches mit zwei transparenten, leitfähig beschichteten Oberflächen arbeitet, dabei kann z.B. eine Oberfläche auf einer festen Glasplatte aufgebracht sein und die weitere Oberfläche auf einer flexiblen Folie, welche sich im geringen Abstand oberhalb der Glasplatte befindet. Vorzugsweise wird der Abstand zwischen den beiden beschichteten Flächen durch kleine, kaum sichtbare Abstandshalter festgelegt. Durch Druck auf die Sensoranordnung entsteht zwischen den beiden metallisch beschichteten Oberflächen ein elektrischer Kontakt, welcher als eine Widerstandsänderung ausgewertet werden kann und somit eine Position bestimmt werden kann. Insbesondere bei einer Sensoranordnung mit einem resistiv arbeitenden Verfahren ist der Einsatz von Entkopplungsmittel, welche als Schaltelemente ausgestaltet sind, von Vorteil. Durch die Schaltelemente kann dann ein für die Auswertung der Positionsbestimmung angeschlossener Gleichstrom von einem Heizstrom, welcher auch als Gleichstrom durch die metallisch beschichtete Oberfläche geschickt wird, getrennt werden.

Als wesentliche Vorteile sind das gleichzeitige Nutzen einer einzigen metallisierten Schicht für zwei Funktionen zu nennen. Die erste Funktion ist das Erfassen einer Position und die zweite Funktion ist das Beheizen, beispielsweise einer Glasscheibe. Eine zweite Glasscheibe mit einer zweiten metallisierten Schicht kann somit entfallen. Durch diese Lösung fällt eine mehrfache Lichtbrechung weg, welche ansonsten an den Grenzen der zweiten Glasscheibe entstehen würde. Ein eingesetztes LCD-Display kann deutlich näher an die jetzt einzig vorhandene Glasscheibe herangeführt werden, was einen paralaxen Fehler bei seitlichen Betrachten deutlich verrringert.

Die Zeichnung zeigt zwei Ausführungsbeispiele mit weiteren Merkmalen. Es zeigen:
- FIG 1: eine Sensoranordnung mit einer ersten Art von Entkopplungsmitteln, die
- FIG 2: eine Sensoranordnung mit einer zweiten Art von Entkopplungsmitteln und die
- FIG 3: eine besondere Ausgestaltung eines Schaltelementes als Entkopplungsmittel.

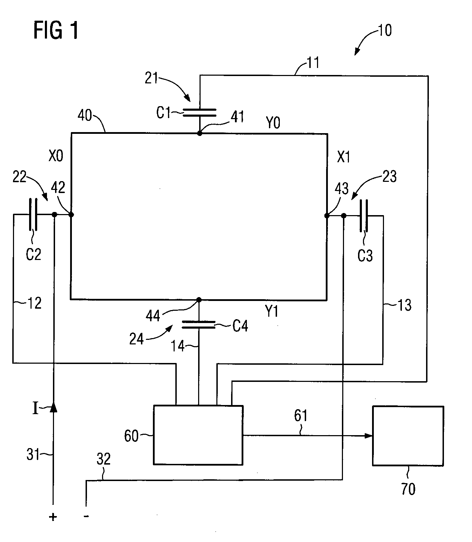

Gemäß FIG 1 ist eine berührungssensitive Sensoranordnung 10 mit einem flächig ausgeprägten Element 40, wobei eine Oberfläche des Elementes 40 mit einer leitfähigen Schicht versehen ist, dargestellt. Das flächige Element 40 ist als eine Glasscheibe ausgestaltet. Die Glasscheibe ist mit einer ITO-Schicht als metallisierte Schicht überzogen. In ihren Randbereichen rechts, links, X0,X1 und oben und unten, Y0,Y1 weist die Glasscheibe im Randbereich Y0 eine erste Anschlussstelle 41, im Randbereich Y1 eine vierte Anschlussstelle 44, im Randbereich X0 eine zweite Anschlussstelle 42 und im Randbereich X1 eine dritte Anschlussstelle 43 auf. Die Anschlussstellen 41,...,44 sind jeweils mit einem Entkopplungsmittel 21,...,24 versehen, wobei die Entkopplungsmittel 21,...,24 als ein den entsprechenden Anschlussstellen zugeordneter erster Kondensator C1, zweiter Kondensator C2, dritter Kondensator C3 und vierter Kondensator C4 ausgestaltet sind.

An die zweite Anschlussstelle 42 ist eine erste Heizleitung 31 direkt angeschlossen. An die dritte Anschlussstelle 43 ist eine zweite Heizleitung 32 direkt angeschlossen. In die erste Heizleitung 31 wird ein Gleichstrom eingespeist, welcher über die erste Heizleitung 31 an die zweite Anschlussstelle 42 und über die metallisierte ITO-Schicht der Glasscheibe zur dritten Anschlussstelle 43 fließen kann und über die zweite Heizleitung 32 wieder zu einer für die Heizung vorgesehenen Stromquelle oder Spannungsversorgung zurückgeführt wird. Dieser Stromfluss I von der zweiten Anschlussstelle 42 zur dritten Anschlussstelle 43 sorgt aufgrund seiner Verlustleistung in der metallischen Schicht für eine Heizwirkung in der Glasscheibe.

Durch das zweite Entkopplungsmittel 22, welches als ein zweiter Kondensator C2 ausgeführt ist, kann der Stromfluss I für die Heizung nicht über den zweiten Kondensator C2 über eine zweite Anschlussleitung 12 zu einer Auswerteeinheit 60 zurückfließen.

Die Auswerteeinheit 60 zum Auswerten eines Auswertesignales zur Positionsbestimmung ist jeweils an einer der vier Anschlussstellen 41,...,44 über eine entsprechende erste Anschlussleitung 11, eine zweite Anschlussleitung 12, eine dritte Anschlussleitung 13 und eine vierte Anschlussleitung 14 an die Glasscheibe angekoppelt, wobei durch die Kondensatoren C1,...,C4 eine galvanische Trennung hervorgerufen wird. Die Kondensatoren C1,...,C4 sperren einen als Gleichstrom ausgelegten Heizstrom, welcher somit nicht in die Auswerteeinheit fließen kann und zu Auswertestörungen führen würde. Da die Auswertung der Positionsbestimmung, vorzugsweise mit hochfrequenten Wechselsignalen erfolgt, bilden die Kondensatoren C1,...,C4 für die Wechselsignale kein Hindernis.

Die Auswerteeinheit 60 ist über eine Datenleitung 61 mit einer CPU 70 verbunden. Die CPU 70 steuert eine Positionsbestimmung, welche auf einen Bildschirm dargestellt werden kann.

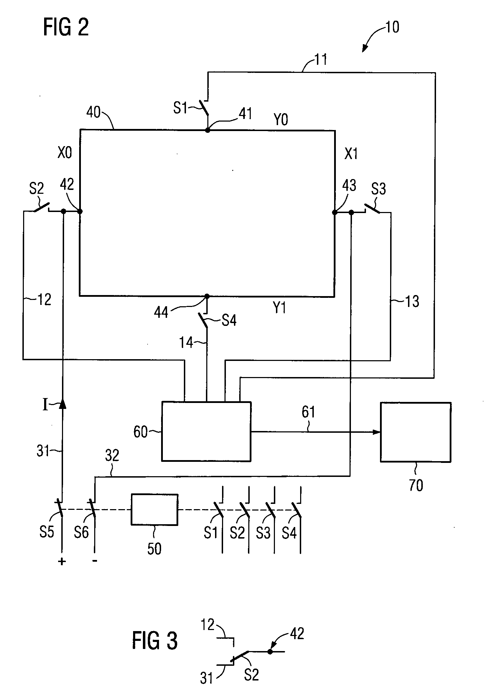

Gemäß FIG 2 ist eine Sensoranordnung 10 ebenfalls mit Entkopplungsmitteln dargestellt, wobei in dieser Ausgestaltungsvariante die Entkopplungsmittel nicht als eine galvanische Trennung ausgeführt sind, sondern als Schaltelemente S1,...,S4. An die erste Anschlussstelle 41 ist ein erstes Schaltelement S1 angeschlossen, an die zweite Anschlussstelle 42 ist ein zweites Schaltelement S2 angeschlossen, an die dritte Anschlussstelle 43 ist ein drittes Schaltelement S3 angeschlossen und an die vierte Anschlussstelle 44 ist ein viertes Schaltelement S4 angeschlossen. Die Schaltelemente S1,...,S4 sind als Stromkreistrenner ausgelegt. Der jeweils andere Anschluss eines jedes Schaltelementes ist mit einer Anschlussleitung 11,...,14, welche zu einer Auswerteeinheit 60 führen, verbunden. An der zweiten Anschlussstelle 42 ist wiederum eine erste Heizleitung 31 und an der dritten Anschlussstelle 43 ist eine zweite Heizleitung 32 angeschlossen. Über diese Heizleitung 31,32 kann, wie in FIG 1 bereits erwähnt, der Strom I vom Randbereich X0 zum Randbereich X1 fließen und durch die entstehende Verlustwärme kann das Element 40, also die Glasscheibe, beheizt werden.

Eine Steuerschaltung 50, ausgelegt als eine Multiplexerschaltung, steuert die Schaltelemente S1,...,S4. Durch die Schaltelemente S1,...,S4 werden die zugehörigen Anschlussleitungen 11,...,14 von der Auswerteeinheit 60 getrennt. Diese Trennung erfolgt aber nur für den Fall, wenn über die erste Heizleitung 31 und die zweite Heizleitung 32 ein Heizstrom eingespeist wird. Um die Einspeisung des Heizstromes zu verhindern, sind zwischen einer Stromversorgung für die Heizung und der ersten Heizleitung 31 ein fünftes Schaltelement S5 und in der zweiten Heizleitung 32 ein sechstes Schaltelement S6 angeordnet. Für die Zeit, in welcher die Schaltelemente S1,...,S4 geschlossen sind, sind die Schaltelemente S5,S6 geöffnet.

Durch die Entkopplungsmittel ist auch bei der Ausführung mit Schaltelementen eine gleichzeitige Nutzung einer metallisierten Schicht für zwei Funktionen möglich.

FIG 3 zeigt ein alternatives Schaltelement am Beispiel des zweiten Schaltelementes S12. Bei dieser Alternative ist das Schaltelement S2 als ein Wechselschalter ausgelegt und mit seiner ersten Anschlussseite an der zweiten Anschlussstelle befestigt. Eine zweite Anschlussseite des Schaltelementes 12 ist an die zweite Anschlussleitung 12 geführt. Eine dritte Anschlussseite des Schaltelementes S2 ist an die erste Heizleitung 31 geführt. Das Schaltelement S2 kann somit in einer Wechselschaltung, vorzugsweise wiederum gesteuert über einen Multiplexer, zwischen der zweiten Anschlussleitung 12 und der ersten Heizleitung 31 hin- und herschalten.

## Patentansprüche

1. Berührungssensitive Sensoranordnung (10), umfassend
- ein flächig ausgeprägtes Element (40), wobei eine Oberfläche des Elementes (40) mit einer leitfähigen Schicht versehen ist,
- mehrere Anschlussstellen (41,42,43,44),
wobei die Anschlussstellen (41,42,43,44) jeweils in einem Randbereich des Elementes (40) angeordnet sind und die leitfähige Schicht kontaktieren,
dadurch h gekennzeichnet, dass
- zwischen den Anschlussstellen (41,42,43,44) und zugehörigen Anschlussleitungen (11,12,13,14) zur Positionsauswertung einer Berührung des Elementes (40) mit einem Berührmittel,
jeweils ein Entkopplungsmittel (21,22,23,24) angeschlossend ist zur Entkopplung eines an zumindest zwei Anschlussstellen (42,43) angelegten Stromes (I) von einem Auswertesignal, wobei durch den Strom (I) das Element (40) beheizbar ist.

2. Berührungssensitive Sensoranordnung (10) nach Anspruch 1, umfassend
- eine erste Anschlussstelle (41),
- eine zweite Anschlussstelle (42),
- eine dritte Anschlussstelle (43),
- eine Vierte Anschlussstelle (44),
wobei
- eine erste Anschlussleitung (11),
- eine zweite Anschlussleitung (12),
- eine dritte Anschlussleitung (13),
- eine vierte Anschlussleitung (14),
jeweils über ein Entkopplungsmittel (21,22,23,24) an die Anschlussstellen (41,42,43,44) angeschlossen ist, wobei
- eine erste Heizleitung (31) an die zweite Anschlussstelle (42) und
- eine zweite Heizleitung (32) an die dritte Anschlussstelle (43) derart angeschlossen ist, dass der Strom (I) nicht über die die Entkopplungsmittel (22,23) führt.

3. Berührungssensitive Sensoranordnung (10) nach Anspruch 1 oder 2, wobei die Entkopplungsmittel (21,22,23,24) zur galvanischen Trennung ausgestaltet sind.

4. Berührungssensitive Sensoranordnung (10) nach Anspruch 3, wobei die Entkopplungsmittel (21,22,23,24) zur kapazitiven Trennung ausgestaltet sind.

5. Berührungssensitive Sensoranordnung (10) nach Anspruch 3, wobei die Entkopplungsmittel (21,22,23,24) zur induktiven Trennung ausgestaltet sind.

6. Berührungssensitive Sensoranordnung (10) nach Anspruch 1 oder 2, wobei die Entkopplungsmittel (21,22,23,24) jeweils als ein Schaltelement (S1,S2,S3,S4) ausgestaltet sind, welche die Anschlussstellen (21,...,24) von den Anschlussleitungen (11,...,14) für das Auswertesignal trennen.

7. Berührungssensitive Sensoranordnung (10) nach Anspruch 6, wobei die Schaltelemente (S1,S2,S3,S4) derart ausgestaltet sind, dass sie mittels einer Steuerschaltung (50) steuerbar sind.

8. Berührungssensitive Sensoranordnung (10) nach Anspruch 7, wobei die Steuerschaltung (50) ausgestaltet ist, dass sie die Schaltelemente (S1,S2,S3,S4) derart steuert, das in einem vorgebbaren Takt entweder die Anschlussleitungen (11,...,14) oder die Heizleitungen (31,32) an den Anschlussstellen (21,...,24) angeschlossen ist.

9. Berührungssensitive Sensoranordnung (10) nach einem der Ansprüche 1 bis 8, wobei die Anschlussleitungen (11,...,14) mit einer Auswerteinheit (60) in Verbindung stehen.

## Claims

1. Touch-sensitive sensor arrangement (10) comprising
- a plane-shaped element (40), a surface of the element (40) being provided with a conductive layer,
- a number of connecting points (41, 42, 43, 44),
the connecting points (41, 42, 43, 44) in each case being arranged in an edge area of the element (40) and contacting the conductive layer,
**characterized in that**
- between the connecting points (41, 42, 43, 44) and associated connecting lines (11, 12, 13, 14) for the evaluation of the position of a contact of the element (40) with a contact means,
in each case a decoupling means (21, 22, 23, 24) is connected for decoupling a current (I), applied to at least two connecting points (42, 43), from an evaluating signal, wherein the element (40) can be heated by the current (I).

2. Touch-sensitive sensor arrangement (10) according to Claim 1, comprising
- a first connecting point (41),
- a second connecting point (42),
- a third connecting point (43),
- a fourth connecting point (44),
wherein
- a first connecting line (11),
- a second connecting line (12),
- a third connecting line (13),
- a fourth connecting line (14),
is in each case connected to the connecting points (41, 42, 43, 44) via a decoupling means (21, 22, 23, 24),
- a first heating line (31) being connected to the second connecting point (42) and
- a second heating line (32) being connected to the third connecting point (43) in such a manner that the current (I) is not conducted via the decoupling means (22, 23).

3. Touch-sensitive sensor arrangement (10) according to Claim 1 or 2, wherein the decoupling means (21, 22, 23, 24) are constructed for galvanic isolation.

4. Touch-sensitive sensor arrangement (10) according to Claim 3, wherein the decoupling means (21, 22, 23, 24) are constructed for capacitive isolation.

5. Touch-sensitive sensor arrangement (10) according to Claim 3, wherein the decoupling means (21, 22, 23, 24) are constructed for inductive isolation.

6. Touch-sensitive sensor arrangement (10) according to Claim 1 or 2, wherein the decoupling means (21, 22, 23, 24) are in each case constructed as a switching element (S1, S2, S3, S4) which isolate the connecting points (21, ..., 24) from the connecting lines (11, ..., 14) for the evaluating signal.

7. Touch-sensitive sensor arrangement (10) according to Claim 6, wherein the switching elements (S1, S2, S3, S4) are constructed in such a manner that they are controllable via a control circuit (50).

8. Touch-sensitive sensor arrangement (10) according to Claim 7, wherein the control circuit (50) is constructed in such a manner that it controls the switching elements (S1, S2, S3, S4) in such a manner that either the connecting lines (11, ..., 14) or the heating lines (31, 32) are connected to the connecting points (21, ..., 24) in a predeterminable cycle.

9. Touch-sensitive sensor arrangement (10) according to one of Claim 1 to 8, wherein the connecting lines (11, ..., 14) are connected to an evaluating unit (60).

## Revendications

1. Agencement (10) de capteur sensible au toucher et comprenant
- un élément (40) estampé en nappe, une surface de l'élément (40 ) étant munie d'une couche conductrice,
- plusieurs points (41, 42, 43, 44) de connexion,
les points ( 41, 42, 43, 44 ) de connexion étant disposés respectivement dans une partie de bord de l'élément ( 40 ) et étant en contact avec la couche conductrice,
**caractérisé en ce que**
- entre les points ( 41, 42, 43, 44 ) de connexion et des lignes ( 11, 12, 13, 14 ) de connexion associées pour l'évaluation de position d'un toucher de l'élément ( 40 ) par un moyen de toucher,
respectivement un moyen ( 21, 22, 23, 24 ) de découplage est raccordé pour découpler, d'un signal d'évaluation, un courant ( I ) appliqué à au moins deux points ( 42, 43 ) de connexion, l'élément ( 40 ) pouvant être chauffé par le courant ( I ).

2. Agencement ( 10 ) de capteur sensible au toucher suivant la revendication 1, et comprenant
- un premier point ( 41 ) de connexion,
- un deuxième point ( 42 ) de connexion,
- un troisième point ( 43 ) de connexion,
- un quatrième point ( 44 ) de connexion,
dans lequel
- une première ligne ( 11 ) de connexion,
- une deuxième ligne ( 12 ) de connexion,
- une troisième ligne ( 13 ) de connexion,
- une quatrième ligne ( 14 ) de connexion,
est raccordée respectivement aux points ( 41, 42, 43, 44 ) de connexion par un moyen ( 21, 22, 23, 24 ) de découplage, dans lequel
- une première ligne ( 31 ) de chauffage est reliée au deuxième point ( 42 ) de connexion et
- une deuxième ligne ( 32 ) de chauffage est reliée au troisième point ( 43 ) de connexion de manière à ce que le courant ne passe pas par les moyens ( 22, 23 ) de découplage.

3. Agencement ( 10 ) de capteur sensible au toucher suivant la revendication 1 ou 2, dans lequel les moyens ( 21, 22, 23, 24 ) de découplage sont conformés pour la séparation galvanique.

4. Agencement ( 10 ) de capteur sensible au toucher suivant la revendication 3, dans lequel les moyens ( 21, 22, 23, 24 ) de découplage sont conformés pour la séparation capacitive.

5. Agencement ( 10 ) de capteur sensible au toucher suivant la revendication 3, dans lequel les moyens ( 21, 22, 23, 24 ) de découplage sont conformés pour la séparation inductive.

6. Agencement ( 10 ) de capteur sensible au toucher suivant la revendication 1 ou 2, dans lequel les moyens ( 21, 22, 23, 24 ) de découplage sont conformés respectivement en un élément ( S1, S2, S3, S4 ) de commutation, qui séparent les points ( 21, ..., 24 ) de connexion des lignes ( 11, ..., 14 ) de connexion pour le signal d'évaluation.

7. Agencement ( 10 ) de capteur sensible au toucher suivant la revendication 6, dans lequel les éléments ( S1, S2, S3, S4 ) de commutation sont conformés de manière à pouvoir être commandés par un circuit ( 50 ) de commande.

8. Agencement ( 10 ) de capteur sensible au toucher suivant la revendication 7, dans lequel le circuit ( 50 ) de commande est conformé de manière à commander les éléments ( S1, S2, S3, S4 ) de commutation de façon à ce que, suivant une cadence pouvant être prescrite, ou bien les lignes ( 11, ...., 14 ) de connexion ou bien les lignes ( 31, 32 ) de chauffage soient reliées aux points ( 21, ...., 24 ) de connexion.

9. Agencement ( 10 ) de capteur sensible au toucher suivant l'une des revendications 1 à 8, dans lequel les lignes ( 11, ...., 14 ) de connexion sont en liaison avec une unité ( 60 ) d'évaluation.
